## Europäisches Patentamt

(19) **European Patent Office**

**Office européen des brevets**

(11) Numéro de publication: **0 034 075**
**B1**

(12)

# FASCICULE DE BREVET EUROPEEN

(45) Date de publication du fascicule du brevet:
18.04.84

(51) Int. Cl.³: **B 03 C 3/68**, H 02 M 7/515

(21) Numéro de dépôt: 81400067.5

(22) Date de dépôt: 20.01.81

(54) Dispositif d'alimentation statique d'un électrofiltre de dépoussiérage électrostatique.

(30) Priorité: 24.01.80 FR 8001707
02.06.80 FR 8012363

(73) Titulaire: **MERLIN GERIN, Rue Henri Tarze,**
**F-38050 Grenoble Cedex (FR)**

(43) Date de publication de la demande:
19.08.81 Bulletin 81/33

(72) Inventeur: **Cuman, Sylvain, Merlin Gerin,**
**F-38050 Grenoble Cedex (FR)**
Inventeur: **Durand, Michel, Merlin Gerin,**
**F-38050 Grenoble Cedex (FR)**

(45) Mention de la délivrance du brevet:
18.04.84 Bulletin 84/16

(74) Mandataire: **Kern, Paul et al, Merlin Gerin Sce.**
**Brevets 20, rue Henri Tarze, F-38050 Grenoble Cedex**
**(FR)**

(84) Etats contractants désignés:
**AT BE CH DE FR GB IT LI NL SE**

(56) Documents cités:
**FR - A - 2 324 116**
**FR - A - 2 325 238**
**FR - A - 2 423 914**
**US - A - 3 551 632**
**US - A - 3 641 740**
**US - A - 3 742 173**
**US - A - 3 877 896**
**US - A - 3 984 215**

**Document Merlin Gerin "Depoussiérage**
**electrostatique, alimentation HT pour électrofiltre"**

ACTORUM AG

Dispositif d'alimentation statique d'un électrofiltre de dépoussiérage électrostatique

L'invention concerne un dispositif d'alimentation statique en courant électrique d'un électrofiltre ayant deux électrodes, l'une reliée à la polarité positive et l'autre à la polarité négative de l'alimentation, dans lequel la sortie d'un convertisseur statique est reliée à l'enroulement primaire d'un transformateur élévateur dont l'enroulement secondaire est relié par l'intermédiaire d'un redresseur auxdites électrodes pour appliquer à ces dernières des impulsions à haute tension continue d'une durée prédéterminée. Des dispositifs d'alimentation du genre mentionné ont déjà été utilisés par la demanderesse et sont connus.

Ce dispositif connu comporte un gradateur à thyristors alimentant sous une tension variable de zéro à la valeur nominale et une fréquence correspondant à celle du réseau, le primaire du transformateur élévateur par variation de l'angle d'ouverture des thyristors commandée par un régulateur analogique. Ce dernier détecte l'apparition de chaque étincelle à l'intérieur de l'électrofiltre et élabore une consigne de pilotage réglable, appelée taux de contre réaction, et appliquée à un amplificateur de régulation. La haute tension continue suit les variations de la tension disruptive en présentant une allure en dents de scie. En cas d'étincelage la tension est réduite par le régulateur d'un faible pourcentage, puis croît de nouveau vers la tension disruptive. La courant injecté dans l'électrofiltre n'est pas stable car il suit les variations de la tension en dents de scie. L'efficacité du dépoussiérage dépend essentiellement de la valeur moyenne du courant haute tension continu et ce dispositif connu ne permet pas d'atteindre une efficacité maximale.

L'invention a pour but de remédier à cet inconvénient et de réaliser une alimentation simple assurant un fonctionnement optimal de l'électrofiltre.

Le dispositif d'alimentation selon l'invention est caractérisé par le fait que ledit convertisseur statique est constitué par un onduleur doté d'un circuit de régulation ayant un dispositif de mesure de la valeur moyenne du courant haute tension d'alimentation de l'électrofiltre et faisant varier la fréquence desdites impulsions et/ou la tension d'alimentation de l'onduleur pour maintenir une valeur optimale dudit courant haute tension correspondant à une haute tension continue entre lesdites électrodes sensiblement constante.

La durée de chaque impulsion de courant injecté est notablement réduite et avantageusement inférieure à 0,5 millisecondes, tandis que la fréquence des impulsions est augmentée, par exemple entre 500 et 2000 Hz, pour obtenir un courant moyen important injecté dans l'électrofiltre. La tension crête des impulsions est maintenue à une valeur inférieure à la tension disruptive de l'électrofiltre pour éviter tout amorçage.

Pour chaque filtre on recherche par le calcul et/ou par des essais la valeur optimale du courant moyen injecté et un dispositif de régulation maintient cette valeur constante en fonctionnement normal du filtre. La régulation du courant moyen injecté est réalisée par variation de la fréquence des impulsions et/ou variation de la tension d'alimentation de l'onduleur. Ces paramètres peuvent être variés simultanément avec la durée des impulsions.

L'augmentation de la fréquence des impulsions, associée au temps de décharge inhérent à l'électrofiltre, permet une diminution de l'ondulation de la haute tension appliquée au filtre dont la valeur moyenne peut être rapprochée de la tension disruptive du filtre sans que la valeur de crête dépasse cette tension disruptive.

Le dispositif selon l'invention ne provoque aucune perturbation du réseau d'alimentation par le facteur de forme de courant en amont du groupe transformateur redresseur.

Il est à noter que des alimentations d'électrofiltre par des impulsions à fréquence élevée ont déjà été proposées (brevets US-A-3 984 215 et US-A-3 641 740) afin de pouvoir dépasser la tension disruptive pendant une courte durée sans provoquer un amorçage. Ces alimentations connues procèdent d'un principe d'alimentation différente.

Le document FR-A-2 423 914 est relatif à une installation de traitement d'articles au moyen de décharges luminescentes. L'énergie de chaque impulsion est déterminée par la capacité d'un condensateur et elle est limitée à une valeur inférieure à celle provoquant une détérioration des articles, en cas de décharge en arc. La haute tension entre les électrodes n'est pas maintenue constante.

Selon un développement de l'invention, le circuit de régulation de la valeur moyenne du courant haute tension comporte un détecteur d'écart de cette valeur moyenne par rapport à une valeur de consigne et un convertisseur analogique digital qui délivre des impulsions de pilotage au circuit d'allumage des thyristors de l'onduleur en fonction du signal d'écart pour varier la fréquence des impulsions haute tension.

Selon une variante de réalisation le détecteur d'écart du circuit de régulation de la valeur moyenne du courant haute tension agit sur la tension continue d'alimentation de l'onduleur, notamment en faisant varier l'allumage des thyristors d'un redresseur à thyristors alimentant l'onduleur.

Selon une autre variante de réalisation, l'onduleur du type à commutation forcée est piloté par ledit circuit de régulation de la valeur moyenne du courant haute tension pour varier la durée et la fréquence des impulsions haute tension en fonction de ladite valeur moyenne en modifiant le temps d'allumage des thyristors de blocage et des thyristors principaux.

L'invention n'est bien entendu nullement limitée à un type particulier d'onduleur et le dispositif d'alimentation peut comporter des sécurités usuelles tel qu'un détecteur d'arc interrompant l'alimentation lors d'un amorçage intempestif.

D'autres avantages et caractéristiques ressortiront plus clairement de l'exposé qui va suivre de différents modes de mise en oeuvre de l'invention, donnés à titre d'exemples non limitatifs et représentés aux dessins annexés, dans lesquels:

la figure 1 est un schéma électrique d'une alimentation statique d'un électrofiltre selon l'invention;

Les figures 2a et 2b représentent les courbes représentatives de la tension U appliquée à l'électrofiltre, et du courant I injecté en fonction du temps;

la figure 3 montre un schéma synoptique du régulateur de fréquence selon la figure 1;

la figure 4 est un schéma électrique d'une variante de réalisation d'une alimentation selon l'invention;

les figures 5 et 6 montrent des schémas synoptiques respectivement de l'oscillateur de commande du circuit d'aiguillage de l'onduleur, et du régulateur de courant selon la figure 4;

les figures 7 et 8 représentent deux autres variantes de réalisation de l'alimentation selon l'invention.

Les mêmes numéros de repère désignent sur les différentes figures les mêmes éléments ou des éléments analogues.

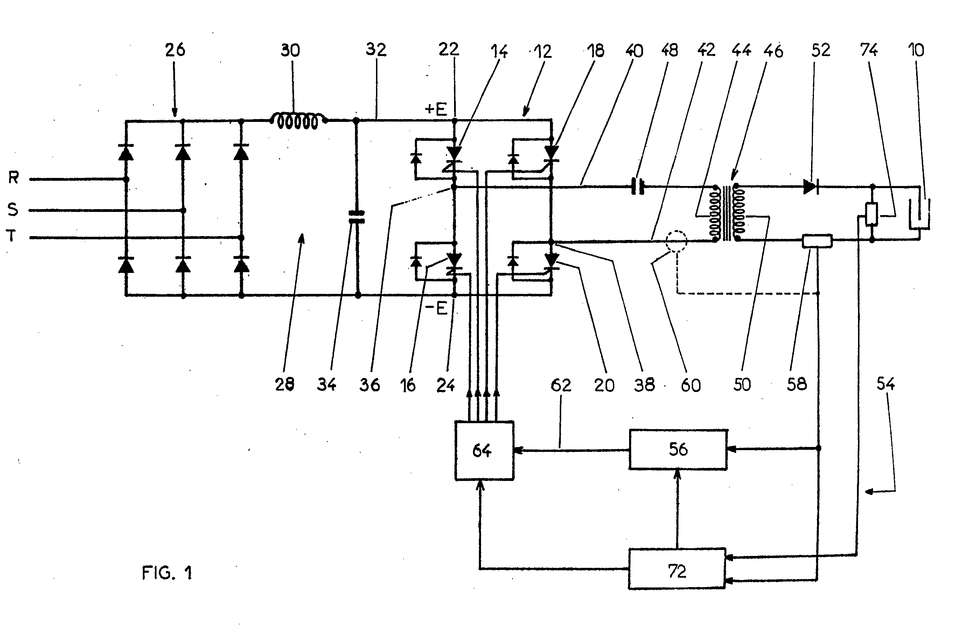

Sur la figure 1, le dispositif d'alimentation d'un électrofiltre 10 à haute tension de dépoussiérage électrostatique comporte un onduleur 12 monophasé à commutation naturelle, formé par quatre thyristors 14, 16, 18, 20 branchés en pont. La tension continue E, appliquée aux bornes d'entrée 22, 24 de l'onduleur 12, est obtenue par redressement de la tension d'alimentation triphasée du réseau alternatif RST dans un redresseur statique 26, suivi d'un filtrage dans un filtre 28 continu à bobine d'inductance 30 et à condensateur 34. La bobine 30 est branchée en série dans un conducteur d'alimentation 32 reliant le redresseur 26 à la borne 22 de l'onduleur. Le condensateur 34 du circuit de lissage est connecté en parallèle aux bornes d'entrée 22, 24 de l'onduleur 12, respectivement portées aux potentiels positif et négatif de la source E. Les bornes de sorties 36, 38 du pont de l'onduleur 12 sont reliées par deux conducteurs de liaison 40, 42 à l'enroulement primaire 44 basse tension d'un transformateur élévateur 46. Un condensateur 48 de valeur prédéterminée C est inséré en série dans le conducteur 40 et forme un circuit oscillant LC avec l'inductance propre L du transformateur 46. L'enroulement secondaire 50 à haute tension du transformateur 46 est associé à un redresseur 52 haute tension branché à l'électrofiltre 10 de dépoussiérage.

Le dispositif d'alimentation est équipé d'un système de régulation et de commande, désigné par le repère général 54. Le système de régulation 54 est piloté par la valeur moyenne du courant haute tension continue détectée par un shunt 58 inséré entre l'électrofiltre 10 et l'enroulement secondaire 50. Cette valeur moyenne peut également être mesurée par un transformateur d'intensité 60 (représenté en pointillé) assurant la captation du courant primaire du transformateur 46. La mesure de ladite valeur moyenne est appliquée à l'entrée d'un régulateur de fréquence 56 dont la sortie est connectée par un conducteur 62 à un circuit d'aiguillage 64, qui élabore les impulsions de commande d'allumage des thyristors 14, 16, 18, 20 de l'onduleur 12 à circuit oscillant LC.

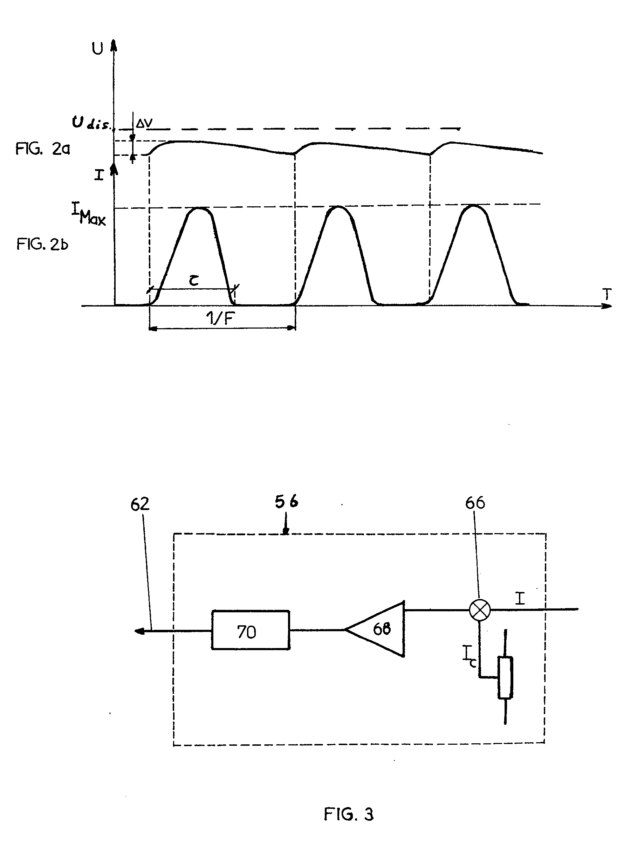

En se référant à la figure 3, on voit que le régulateur de fréquence 56 est formé par un comparateur 66 associé à un amplificateur 68, qui pilote un convertisseur analogique digital 70 du type à tension/fréquence. Le comparateur 66 délivre un signal d'erreur ou d'écart à partir d'une contre réaction d'intensité du courant mesuré I comparée à un courant de consigne $I_c$.

Le système de régulation et de commande 54 est équipé d'autre part d'un détecteur d'arc 72 raccordé au circuit d'aiguillage 64 pour assurer le blocage des impulsions de commande et l'extinction des thyristors de l'onduleur 12 lors de l'apparition éventuelle d'un arc à l'intérieur de l'électrofiltre 10. Cette détection s'effectue d'une manière bien connue à partir de la tension secondaire prélevée par un diviseur potentiométrique 74 et de l'intensité secondaire I du transformateur 46.

Le fonctionnement du système de régulation 54 de l'onduleur 12 à circuit oscillant LC est basé sur le principe du contrôle du courant redressé, injecté dans l'électrofiltre 10:

Les thyristors 14, 20; 16, 18 de l'onduleur 12 monophasé sont alternativement allumés par les impulsions de commande du circuit d'aiguillage 64 pour appliquer la tension continue +E, puis —E au circuit oscillant LC série formé par le condensateur 48 et la self-induction de l'enroulement primaire 44. L'oscillation naturelle du circuit LC provoque le blocage des thyristors allumés 14, 20; 16, 18 après une durée prédéterminée τ et l'impulsion de durée τ est élevée dans le transformateur élévateur 46. L'impulsion de courant haute tension délivrée par le secondaire 50 du transformateur élévateur 46 est redressée dans le redresseur 52 et appliquée aux électrodes de l'électrofiltre 10. La fréquence F de répétition des impulsions de courant injectées dans l'électrofiltre est commandée par le régulateur de fréquence 56 en fonction du courant moyen haute tension mesuré par le shunt 58, de manière à maintenir ce courant moyen constant.

La durée τ et l'intensité crête $I_{Max}$ de chaque impulsion de courant sont déterminées par le circuit oscillant LC, notamment par le choix de la capacité C du condensateur 48 et de la self L du transformateur 46. La durée τ est inférieure à 0,5 milliseconde et la fréquence des impulsions est comprise entre 500 et 2000 Hz. L'intensité crête $I_{Max}$ est choisie de manière que la tension crête reste inférieure à la tension disruptive de l'électrofiltre.

On voit sur les courbes représentatives de la tension U aux bornes de l'électrofiltre (fig. 2a) et du courant I injecté (fig. 2b) que la tension U reste pratiquement constante, et inférieure à la tension disruptive.

La faible ondulation ΔV de la tension résulte du temps de décharge de l'électrofiltre 10 entre deux impulsions de courant successives et de la fréquence élevée F des impulsions.

La faible durée τ (inférieure à 0,5 milliseconde) des impulsions diminue les risques d'amorçage entre les électrodes de l'électrofiltre 10.

L'alimentation par onduleur statique 12 selon l'invention est susceptible d'améliorer le rendement des installations existantes. Elle est alors branchée en parallèle aux bornes de l'électrofiltre avec l'alimentation traditionnelle comprenant par exemple un gradateur à thyristors.

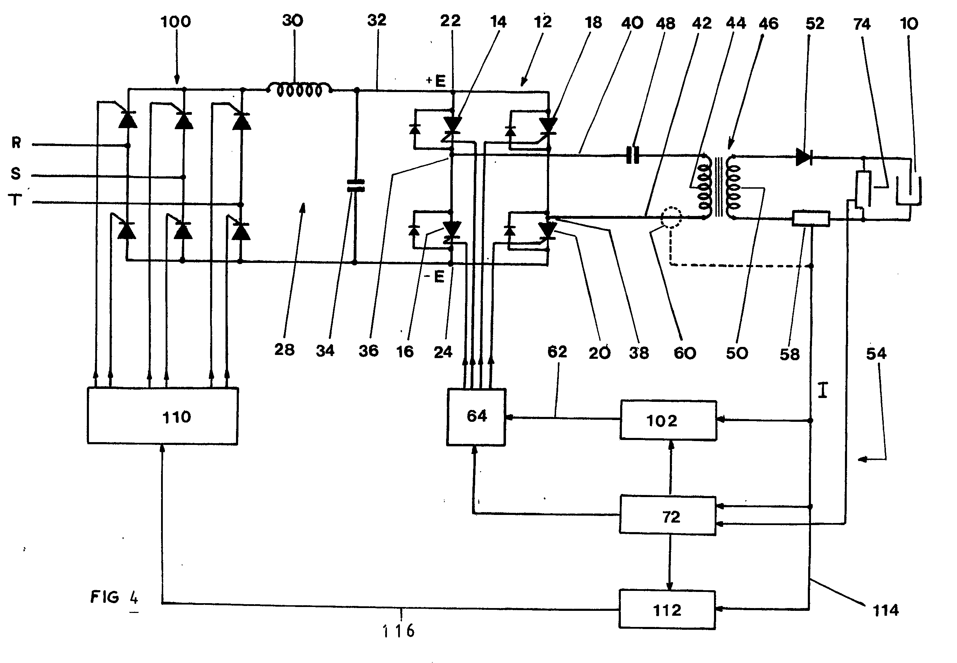

Dans la variante de réalisation illustrée par la figure 4, l'onduleur 12 à circuit oscillant LC est alimenté par une tension continue E variable délivrée par un redresseur statique 100 à thyristors en pont triphasé, qui redresse la tension d'alimentation triphasée du réseau alternatif RST. Le filtre 28 est intercalé entre le redresseur 100 et l'onduleur 12 pour le lissage de la tension redressée E appliquée aux bornes d'entrée 22, 24 de l'onduleur 12, respectivement portées aux potentiels positif et négatif.

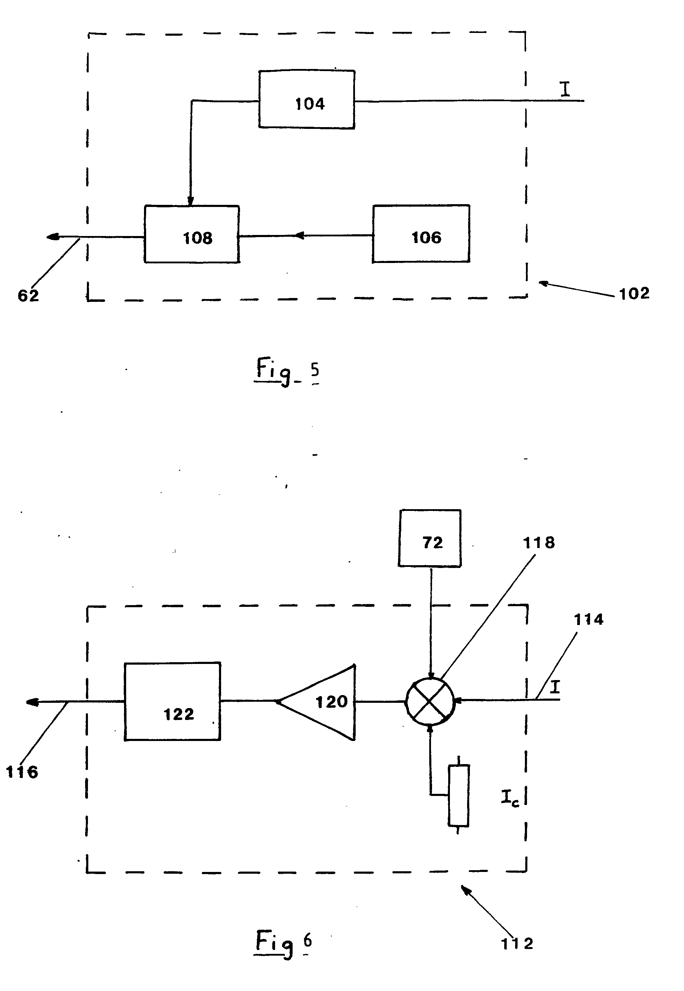

Le dispositif de régulation 54 comporte un oscillateur 102, relié au shunt 58 ou au transformateur 60 et appliquant au circuit d'aiguillage 64 des impulsions à fréquence fixe. L'oscillateur 102 est par exemple composé d'un détecteur 104 de passage à zéro du courant I et d'un générateur auxiliaire d'impulsions 106 connectés aux entrées d'une porte logique 108 dont la sortie est reliée au circuit d'aiguillage 64 par le conducteur 62 (fig. 5). Le détecteur 104 de passage à zéro du courant asservit le générateur d'impulsions 106 de telle manière qu'une impulsion de commande ne peut succéder à une autre à la sortie de la porte logique 108 qu'après le passage à zéro du courant, qui a pris naissance avec cette impulsion. L'oscillateur 102 fixe la fréquence des impulsions à une valeur optimale prédéterminée.

La régulation de la valeur moyenne du courant haute tension injecté dans l'électrofiltre 10 est effectuée par variation de la tension continue E appliquée à l'onduleur 12 de la manière suivante:

Les électrodes de commande des thyristors du redresseur 100 sont branchées à un circuit d'allumage 110 relié par un conducteur 116 à un régulateur de courant 112. L'entrée de ce dernier est raccordée par un conducteur 114 soit au shunt 58, soit au transformateur d'intensité 60.

En se référant à la figure 6, on voit que le régulateur de courant 112 est formé par un comparateur 118, qui élabore une tension d'erreur à partir d'une contre réaction d'intensité du courant moyen haute tension I comparée à un courant de consigne $I_c$. La tension d'erreur est appliquée à un amplificateur 120 et transformée en impulsions réglables par un convertisseur 122. Ces impulsions synchronisées par le réseau d'alimentation RST sont transmises aux électrodes de commande des thyristors du pont redresseur 100 par le circuit d'amorçage 110, et déterminent la valeur de la tension E d'alimentation de l'onduleur 12.

Le détecteur d'arc 72 coopère avec le comparateur 118 du régulateur de courant 112 pour provoquer en cas d'amorçage une diminution de la tension E d'entrée de l'onduleur 12.

L'oscillateur 102 à fréquence fixe peut être remplacé par le régulateur 56 selon la figure 1. Le réglage du courant moyen injecté dans l'électrofiltre 10 résulte alors de la variation de la fréquence F des impulsions de courant, et de la variation de la tension E d'alimentation de l'onduleur 12. Dans ce cas le régulateur 112 peut être remplacé par un régulateur du taux d'étincelage.

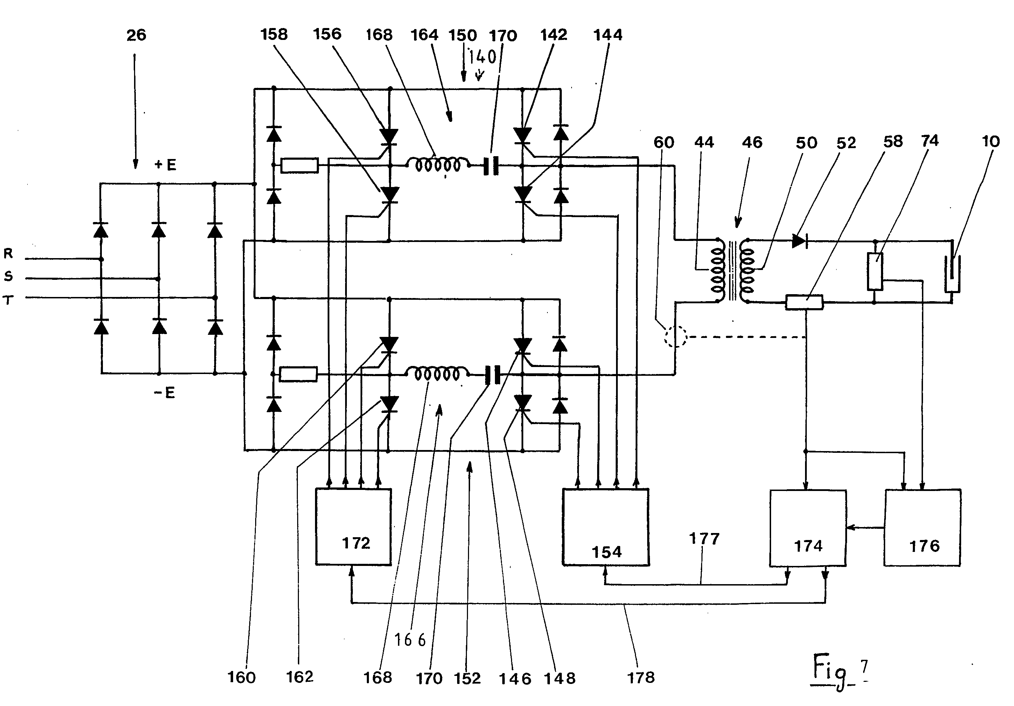

La figure 7 montre une autre variante de réalisation, à onduleur 140 à commutation forcée. L'onduleur 140 comprend des thyristors principaux 142, 144; 146, 148 branchés en série deux à deux respectivement dans deux bras 150, 152 en parallèle de l'onduleur, chaque bras étant alimenté par la tension continue E délivrée par le pont redresseur 26. Les thyristors principaux 142 à 148 sont alternativement allumés par des impulsions de commande délivrées par un premier circuit d'allumage 154, de manière à appliquer la tension + E, puis ––E au primaire 44 du groupe transformateur 46, redresseur 52. La tension alternative à la sortie de l'onduleur 140 provient ainsi de la commutation, soit du pôle positif, soit du pôle négatif de la tension continue E avec la sortie. Chaque bras 150, 152 de l'onduleur 140 comporte deux thyristors d'extinction 156, 158; 160, 162 associés à un circuit d'extinction 164, 166 comprenant une self 168 en série avec un condensateur 170. Les thyristors d'extinction 156 à 162 sont alternativement allumés par des impulsions de commande engendrées par un deuxième circuit d'allumage 172 pour provoquer l'extinction des thyristors respectifs 142 et 148 et l'arrêt du courant dans le primaire 44 du transformateur 46. L'extinction s'opère d'une manière bien connue des spécialistes par la décharge du condensateur 170 du circuit d'extinction 164, 166 correspondant dans la direction contraire au thyristor principal à désamorcer. L'onde rectangulaire de tension appliquée au primaire 44 du transformateur 46 engendre des impulsions de courant redressées par le redresseur 52 haute tension avant leur injection dans l'électrofiltre 10.

Un régulateur de fréquence 174, piloté soit par le courant secondaire redressé circulant dans l'électrofiltre 10, soit par le courant primaire de l'enroulement 44 du transformateur 46, est raccordé par deux conducteurs 177, 178 de liaison respectivement aux premier et deuxième circuits d'allumage 154, 172. La durée $\tau$ et la fréquence F de répétition des impulsions de courant injectées dans l'électrofiltre 10 sont commandées par le régulateur de fréquence 174, qui règle le courant moyen injecté à une valeur prédéterminée.

Un détecteur d'arc 176 provoque en cas d'amorçage l'interruption du courant injecté dans l'électrofiltre par l'allumage des thyristors d'extinction 156 à 162 entraînant le blocage des thyristors principaux 142 à 148 correspondants.

Le pont redresseur 26 à diodes d'alimentation de l'onduleur 140 à commutation forcée peut bien être remplacé par un pont redresseur à thyristors du type représenté à la figure 4 et commandé de la manière décrite ci-dessus.

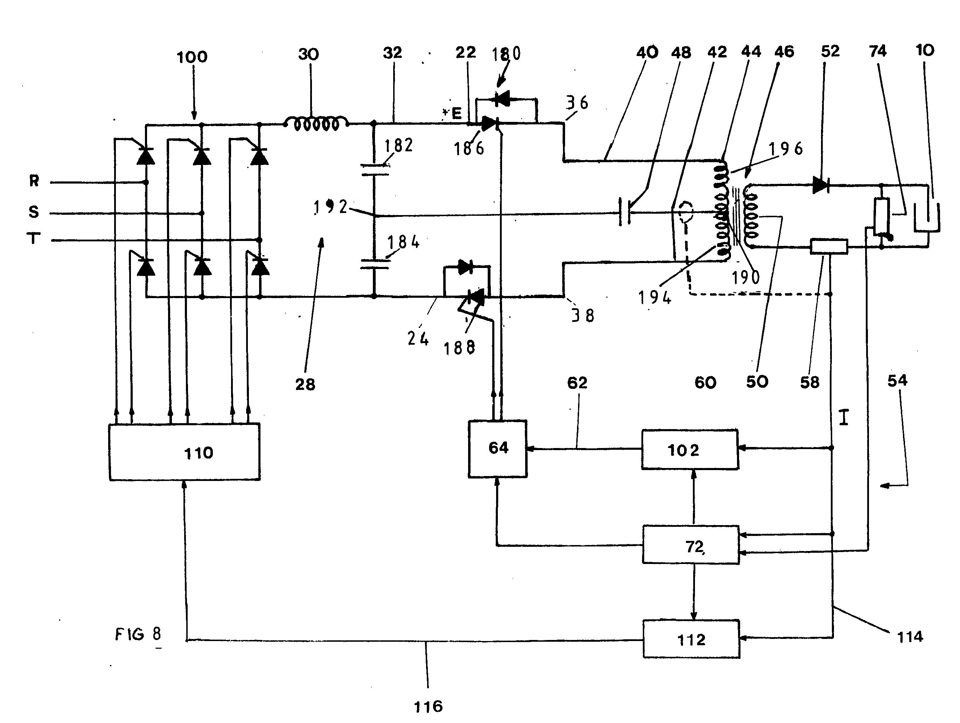

La figure 8, analogue à la figure 4, illustre une variante de réalisation de l'onduleur. L'élément capacitif du filtre 28 est constitué de deux condensateurs 182, 184 connectés en série et branchés aux bornes d'entrée 22, 24 de l'onduleur 180 à commutation naturelle. L'onduleur 180 comprend deux thyristors 186, 188 dont les électrodes d'allumage sont reliées au circuit d'aiguillage 64. Les bornes de sortie 36, 38 de l'onduleur sont reliées au primaire 44 constitué de deux enroulement 194, 196 bobinés de telle sorte que les débuts d'enroulement sont connectés aux bornes 36, 38 tandis que les fins d'enroulement sont connectées ensemble à une borne 190. Cette borne 190 est reliée au point milieu 192 des condensateurs 182, 184 par un condensateur d'oscillation 48. Chaque enroulement 194, 196 forme ainsi avec le condensateur 48 un circuit oscillant de blocage. Le fonctionnement du dispositif d'alimentation reste bien entendu identique à celui de la figure 4.

## Revendications

1. Dispositif d'alimentation statique en courant électrique d'un électrofiltre (10) ayant deux électrodes, l'une reliée à la polarité positive et l'autre à la polarité négative de l'alimentation, dans lequel la sortie d'un convertisseur statique (12, 140, 180) est reliée à l'enroulement primaire d'un transformateur élévateur (46) dont l'enroulement secondaire est relié par l'intermédiaire d'un redresseur (52) auxdites électrodes pour appliquer à ces dernières des impulsions à haute tension continue d'une durée prédéterminée, caractérisé par le fait que ledit convertisseur statique est constitué par un onduleur (12, 140, 180) doté d'un circuit de régulation (54, 174), ayant un dispositif (58, 60) de mesure de la valeur moyenne du courant haute tension d'alimentation de l'électrofiltre et faisant varier la fréquence F desdites impulsions et/ou la tension d'alimentation E de l'onduleur pour maintenir une valeur optimale dudit courant haute tension correspondant à une haute tension continue entre lesdites électrodes sensiblement constante.

2. Dispositif d'alimentation selon la revendication 1, caractérisé par le fait que la fréquence desdites impulsions à haute tension continue est comprise entre 500 et 2000 Hz, la durée de chaque impulsion étant inférieure à 0,5 millisecondes.

3. Dispositif d'alimentation selon la revendication 1 ou 2, caractérisé en ce qu'il comprend un onduleur (12) à commutation naturelle ayant un circuit oscillant (44, 48) de blocage branché en série de l'électrofiltre et fixant la durée (τ) et l'intensité maximale de chaque impulsion à haute tension.

4. Dispositif d'alimentation selon la revendication 3, caractérisé en ce qu'il comporte un circuit comparateur (66) relié audit dispositif (58, 60) de mesure et délivrant un signal analogique d'écart lorsque ladite valeur moyenne du courant haute tension s'écarte d'une valeur de consigne et un convertisseur (70) analogique digital transformant ledit signal en des impulsions de pilotage d'un circuit d'aiguillage (64) relié à l'onduleur pour varier la fréquence (F) des impulsions à haute tension en fonction de ladite valeur moyenne du courant haute tension.

5. Dispositif d'alimentation selon la revendication 3 ou 4, caractérisé en ce que ledit onduleur (12) est alimenté par un redresseur (100) à thyristors ayant un circuit (110) d'allumage des thyristors, piloté par ledit circuit de régulation (54) de la valeur moyenne du courant haute tension pour varier la tension d'alimentation (E) de l'onduleur (12) en fonction de ladite valeur moyenne du courant haute tension.

6. Dispositif d'alimentation selon la revendication 3, caractérisé en ce que l'inductance (44) dudit circuit oscillant à inductance (44) et capacité (48) est constituée par l'enroulement primaire dudit transformateur élévateur (46).

7. Dispositif d'alimentation selon la revendication 1 ou 2, caractérisé en ce qu'il comprend un onduleur (140) à commutation forcée ayant des thyristors principaux (142-148) allumés par un premier circuit d'allumage (154) et des thyristors d'extinction (156-162) allumés par un deuxième circuit d'allumage (172) et un circuit (174) de régulation de ladite valeur moyenne du courant haute tension pilotant lesdits deux circuits d'allumage (154, 172) pour régler la fréquence (F) et la durée (τ) desdites impulsions à haute tension continue.

8. Dispositif d'alimentation selon l'une des revendications 3 à 7, caractérisé en ce qu'il comporte un détecteur d'arc (74) pour détecter un amorçage intempestif dans l'électrofiltre (10) et piloter le circuit d'allumage de l'onduleur (12, 140, 180) pour interrompre l'alimentation de l'électrofiltre.

## Patentansprüche

1. Statische Stromversorgungsvorrichtung eines Elektrofilters (10) mit zwei Elektroden, die je mit der positiven und der negativen Polarität verbunden sind, wobei der Ausgang eines statischen Umformers (12, 140, 180) mit der primären Wicklung eines Erhöhungswandlers (46) verbunden ist, dessen sekundäre Wicklung mittels eines Gleichrichters (52) mit den genannten Elektroden verbunden ist, um an diesen Elektroden Hochgleichspannungsimpulse während einer vorbestimmten Zeit anzulegen, dadurch gekennzeichnet, dass der genannte statische Umformer aus einem Wechselrichter (12, 140, 180) besteht mit einer Steuerungsschaltung (54, 174), die eine die Mittelstromstärke der Hochspannungsversorgung des Elektrofilters messende Messvorrichtung (58, 60) besitzt, und die die Frequenz (F) der genannten Impulse und/oder die Versorgungsspannung (E) des Wechselrichters ändert, um den optimalen, einer Hochgleichspannung zwischen den genannten Elektroden entsprechenden Wert des genannten Hochspannungsstromes ungefähr konstant zu halten.

2. Versorgungsvorrichtung nach Anspruch 1, dadurch gekennzeichnet, dass die Frequenz der Hochspannungsimpulse 500 bis 2.000 Hz ist, und dass die Dauer jedes Impulses kleiner als 0,5 Millisekunden ist.

3. Versorgungsvorrichtung nach Anspruch 1 oder 2, dadurch gekennzeichnet, dass der selbstkommutierende Wechselrichter (12) einen in Serie des Elektrofilters geschalteten Blockierschwingkreis (44, 48) aufweist, der die Dauer (τ) und den Höchstwert jedes Hochspannungsimpulses bestimmt.

4. Versorgungsvorrichtung nach Anspruch 3, dadurch gekennzeichnet, dass sie eine mit der genannten Messvorrichtung (58, 60) verbundene Vergleichsschaltung (66), die ein analogisches Unterschiedssignal abgibt, wenn die genannte Mittelstromstärke des Hochspannungsstromes sich von dem Stellwert entfernt, aufweist, sowie einen Analog-Digitalformer (70), der das genannte Signal in Steuerimpulse einer mit dem Wechselrichter verbundenen Weichenschaltung (64) umwandelt zur Änderung der Frequenz (F) der Hochspannungsimpulse in Abhängigkeit der genannten Mittelstromstärke der Hochspannung.

5. Versorgungsvorrichtung nach Anspruch 3 oder 4, dadurch gekennzeichnet, dass der genannte Wechselrichter (12) durch einen Thyristorgleichrichter (100) gespeist wird, wobei die Zündschaltung (110) der Thyristoren durch die genannte Steuerungsschaltung (54) der Hochspannungsmittelstromstärke gesteuert wird, um die Versorgungsspannung (E) des Wechselrichters (12) in Abhängigkeit der genannten Hochspannungsmittelstromstärke zu ändern.

6. Versorgungsvorrichtung nach Anspruch 1, dadurch gekennzeichnet, dass die Induktion (44) des Schwingkreises mit einer Induktanz (44) und Kapazität (48) durch die Primärwicklung des genannten Erhöhungswandlers (46) gebildet wird.

7. Versorgungsvorrichtung nach Anspruch 1 oder 2, dadurch gekennzeichnet, dass sie einen Wechselrichter (140) mit Zwangskommutierung hat, deren Hauptthyristoren (142-148) durch einen ersten Zündstromkreis (154) und deren Löschthyristoren (156-162) durch einen zweiten Zündstromkreis (172) gezündet werden, und eine Steuerschaltung (174) der genannten Hochspannungsmittelstromstärke, die die beiden genannten Zündstromkreise (154, 172) steuert, um die Frequenz (F) und die Dauer ( $\tau$ ) der genannten Hochgleichspannungsimpulse zu regeln.

8. Versorgungsvorrichtung nach einem der vorhergehenden Ansprüche 3 bis 7, dadurch gekennzeichnet, dass sie einen Lichtbogendetektor (74) aufweist, der eine unzeitgemässe Zündung im Elektrofilter (10) detektiert und den Zündstromkreis des Wechselrichters (12, 140, 180) zur Unterbrechung der Stromversorgung des Elektrofilters steuert.

**Claims**

1. Device of electric current static supply of an electrofilter (10) having two electrodes, one connected to the positive polarity and the other to the negative polarity of the supply, in which the output of a static converter (12, 140, 180) is connected to the primary winding of a step-up transformer (46), the secondary winding of which is connected to said electrodes by means of a rectifier (52) to apply continuous high voltage impulses of predetermined duration to these last electrodes, characterised in that said static converter comprises an inverter (12, 140, 180) equipped with a regulation circuit (54, 174), having a device (58, 60) to measure the average value of the high voltage current which supplies the electrofilter and making the frequency (F) of said impulses vary and/or the supply voltage (E) of the inverter to maintain an optimum value of said high voltage current corresponding to a continuous high voltage reasonably constant between said electrodes.

2. Supply device according to claim 1, characterised in that the frequency of said continuous high voltage impulses is comprised between 500 and 2000 Hz, the duration of each impulse being below 0.5 milliseconds.

3. Supply device according to claim 1 or 2, characterised in that it comprises an inverter (12) with natural switching having a blocking oscillatory circuit (44, 48) series tapped-off with the electrofilter and fixing the duration ( $T$ ) and the maximum intensity of each high voltage impulse.

4. Supply device according to claim 3, characterised in that it comprises a comparator circuit (66) connected to said measuring device (58, 60) and generating a variation analog signal when said average value of the high voltage current deviates from a set value and an analog digital converter (70) converting said signal into impulses driving a switching circuit (64) connected to the inverter in order to vary the frequency (F) of high voltage impulses in terms of said average value of high voltage current.

5. Supply device according to claim 3 or 4, characterised in that said inverter (12) is supplied by a thyristors rectifier (100) having a circuit (110) to ignite the thyristors, drived by said circuit (54) to regulate the average value of the high voltage current in order to vary the supply voltage (E) of the inverter (12) in terms of said average value of the high voltage current.

6. Supply device according to claim 3, characterised in that the inductance (44) of said oscillatory circuit with inductance (44) and capacity (48) is composed by the primary winding of said step-up transformer (46).

7. Supply device according to claim 1 or 2, characterised in that it comprises an inverter (140) with forced switching having main thyristors (142-148) ignited by a first ignition circuit (154) and extinction thyristors (156-162) ignited by a second ignition circuit (172) and a circuit (174) to regulate said average value of the high voltage current driving said two ignition circuits (154, 172) in order to adjust the frequency (F) and the duration ( $T$ ) of said continuous high voltage impulses.

8. Supply device according to one of the claims 3 to 7, characterised in that it comprises an arc detector (74) to detect an untimely ignition inside the electrofilter (10) and to drive the circuit to ignite the inverter (12, 140, 180) in order to interrupt the electrofilter supply.

FIG. 1

0 034 075

U

$U_{dis.}$   ΔV

FIG. 2a

I

$I_{Max}$

FIG. 2b

τ

1/F

T

62        56        66

70        68        I

$I_c$

FIG. 3

FIG 4

I

104

108 ← 106

62

102

_Fig_ 5

72

118

114

122 ← 120 ← ⊗ ← I

116

$I_c$

112

_Fig_ 6

Fig. 7

FIG 8

0 034 075